# EUROPÄISCHE PATENTSCHRIFT

(11) **EP 3 752 752 B1**
(45) Veröffentlichungstag und Bekanntmachung des Hinweises auf die Patenterteilung: **16.10.2024**
(21) Anmeldenummer: 19700228.0
(22) Anmeldetag: 09.01.2019
(51) Int. Cl.: F16F 1/02, F16F 1/18

(54) **FEDER ZUR VERWENDUNG IM ZUSAMMENHANG MIT EINEM FAHRZEUG**
SPRING FOR USE IN CONJUNCTION WITH A VEHICLE
RESSORT À UTILISER EN ASSOCIATION AVEC UN VÉHICULE

(30) Priorität: 14.02.2018 AT 501392018
(43) Veröffentlichungstag der Anmeldung: 23.12.2020
(73) Patentinhaber: Hendrickson Commercial Vehicle Systems Europe GmbH, 8750 Judenburg (AT)
(72) Erfinder: ZAMBERGER, Jörg, 8753 Fohnsdorf (AT); NATTLAND, Friedhelm, 41564 Kaarst (DE); MARTEAU-LORANT, Séverin, 25200 Grand-Charmont (FR); LEONARDS, Rainer, 52428 Jülich (DE)
(74) Vertreter: Beer & Partner Patentanwälte KG
(86) Internationale Anmeldenummer: PCT/EP2019/050395
(87) Internationale Veröffentlichungsnummer: WO 2019/158276

(56) Entgegenhaltungen:
- EP-A1- 3 222 872
- WO-A1-90/03281
- JP-A- 2003 237 335
- JP-A- 2004 306 805

## Beschreibung

Die Erfindung betrifft eine Feder mit den Merkmalen des Oberbegriffes des Anspruches 1.

Eine gattungsgemäße Feder ist aus JP 2004-306805 A1 bekannt.

Im Fahrzeugbau ist es bekannt, die Räder und das Fahrgestell eines Fahrzeuges gegeneinander zu federn. Insbesondere bei besonders großen und schweren Fahrzeugen werden hierfür Blattfedern verwendet, da durch eine einfache Bauweise ein breites Spektrum von Belastungsanforderungen abgedeckt wird.

Als besonders vorteilhaft haben sich Federn mit einer nichtlinearen, insbesondere progressiven, Kennlinie herausgestellt, da sich eine solche Kennlinie positiv auf die Fahreigenschaften eines Fahrzeuges auswirkt, das mit einer solchen Federung ausgestattet ist.

Aus der EP 2 885 554 B1 ist eine einteilige Blattfeder aus faserverstärktem Kunststoffmaterial mit einer progressiven Kennlinie bekannt. Diese Feder ist eine Blattzugfeder, d.h. sie ist derart gestaltet, dass sie in Einbauzustand bei steigenden, vom Radträger eingeleiteten, Vertikalkräften zunehmend auf Zug belastet wird. Hierfür weist die Feder zwei mechanisch unbearbeitete Endbereiche auf, die in ortsfesten Aufnahmevorrichtungen momentenfest und drehfest eingespannt sind, wobei die Endbereiche durch die Aufnahmevorrichtungen und die neutrale Faser durch die Schwenkachsen der Aufnahmevorrichtungen verlaufen. Nachteilig dabei ist, dass durch die Beanspruchungskombination bei dieser Feder die zulässige Höchstspannung reduziert wird und die materielle Ausgestaltung und die Anbringung der Feder an einem Fahrzeug zu Lasten einer verminderten Tragfähigkeit gehen.

In der WO 2016/134810 A1 wird eine gattungsgemäße, einteilige Feder aus Federstahl mit einer progressiven Kennlinie vorgeschlagen, welche auf Biegung belastet wird und welche die oben genannten Nachteile vermeidet. Diese Feder ist ausgehend vom Mittelbereich auf einer Seite des Federblatts ausgelenkt und weist angrenzend zum Mittelbereich einen ersten Krümmungsbereich mit einer ersten Krümmungsrichtung und einem ersten Scheitelpunkt auf, wobei sich der erste Scheitelpunkt auf einer Seite der Mittelachse befindet. Dieser Bereich weist in Richtung zum Endbereich hin einen zweiten Krümmungsbereich mit einer zweiten Krümmungsrichtung und einem zweiten Scheitelpunkt auf, wobei die zweite Krümmungsrichtung der ersten Krümmungsrichtung entgegengesetzt ist, und wobei sich der zweite Scheitelpunkt auf der dem ersten Scheitelpunkt gegenüberliegenden Seite der Mittelachse befindet. Zwar werden somit die Nachteile der eingangs genannten Blattzugfeder überwunden, allerdings tritt im vom Mittelbereich ausgelenkten Bereich insbesondere durch Scherkräfte eine Kraftverteilung auf, welche das Risiko eines hohen Verschleißes und somit einer unerwünschten Materialermüdung mit sich bringt.

Aus JP 2003 237335 A, der als nächstliegender Stand der Technik betrachtet ist, ist eine Blattfeder zur Verwendung im Zusammenhang mit einem Kraftfahrzeug bekannt, die ein einteiliges Federblatt mit einem Mittelbereich und zwei anschließenden Randbereichen aufweist. Die Feder weist eine Vielzahl an Krümmungsabschnitten und daher eine recht komplexe Geometrie auf, wodurch sie aufwendig in der Herstellung ist und nur in speziellen Fällen zur Anwendung kommen kann.

Der Erfindung liegt die Aufgabe zu Grunde, eine Blattfeder mit progressiver Federkennrate zur Verfügung zu stellen, welche aus Stahl einfach hergestellt werden kann, wobei eine längere Haltbarkeit der Feder durch gleichmäßige Kraftverteilung erreicht wird. Es ist zudem eine Aufgabe der Erfindung, eine Blattfeder mit progressiver Federkennrate und hoher Tragfähigkeit Verfügung zu stellen.

Gelöst wird diese Aufgabe mit einer Feder, welche die Merkmale des Anspruches 1 aufweist.

Bevorzugte und vorteilhafte Ausführungsformen der Erfindung sind Gegenstand der Unteransprüche.

Erfindungsgemäß ist vorgesehen, dass die gesamte Länge der Feder im Einbauzustand am Fahrzeug in allen Belastungszuständen im Wesentlichen unveränderbar ist, dass das Federblatt im unbelasteten Zustand genau zwei Biegeabschnitte aufweist, wobei die Biegeabschnitte jeweils genau eine Krümmung mit einer Krümmungsrichtung aufweisen, wobei die Krümmungsrichtung der beiden Biegeabschnitte entgegengesetzt ist und wobei die beiden Biegeabschnitte im Bereich eines Wendepunktes ineinander übergehen, und dass der erste Biegeabschnitt ein Vertikalfederabschnitt ist und vom Endbereich des ersten Randbereichs über den Mittelbereich bis zum Wendepunkt verläuft und der zweite Biegeabschnitt ein Horizontal- und Vertikalfederabschnitt ist und vom Wendepunkt bis zum Endbereich des zweiten Randbereiches verläuft. Der erste Biegeabschnitt wirkt als vertikale Feder und der zweite Biegeabschnitt wirkt als vertikale Feder und als horizontale Feder in Längsrichtung der Feder.

Das Federblatt der erfindungsgemäßen Feder weist genau zwei gekrümmte Biegeabschnitte auf. Die Biegeabschnitte weisen im unbelasteten Zustand jeweils genau eine Krümmung mit einer Krümmungsrichtung auf. Das Federblatt der erfindungsgemäßen Feder ist durchgehend aus Stahl, insbesondere aus Federstahl.

Eine erfindungsgemäß gefertigte Feder kann eine stark nichtlineare, insbesondere progressive, Kennlinie haben, was sich positiv auf die Fahreigenschaften eines Fahrzeuges auswirkt, das mit einer erfindungsgemäßen Federung ausgestattet ist. Zudem kann eine erfindungsgemäße Feder nicht nur vertikale Kraftkomponenten, sondern auch horizontale Kraftkomponenten abfedern, welche insbesondere bei einem Bremsvorgang auftreten, da der zweite Biegeabschnitt auch als Horizontalfederabschnitt quasi als Feder in der Feder wirkt. Dabei findet eine gleichmäßige Kraftverteilung statt, da horizontale Kraftkomponenten über die gesamte Länge der Feder verteilt werden. Somit wird die Haltbarkeit und Tragfähigkeit erhöht, wobei bessere Fahreigenschaften für das Fahrzeug erzielt werden können.

Bei einer erfindungsgemäßen Feder treten im Mittelbereich nur minimale Scherkräfte auf. Da somit die Feder insbesondere im Mittelbereich weniger stark ausgeführt sein muss, kann Material eingespart und eine Feder mit geringerem Gewicht hergestellt werden.

In einer besonders bevorzugten Ausführungsform ist vorgesehen, dass der erste Biegeabschnitt länger ist als der zweite Biegeabschnitt und dass der zweite Biegeabschnitt stärker gekrümmt ist als der erste Biegeabschnitt. In unbelastetem Zustand hat der erste Biegeabschnitt nur eine leichte Krümmung, wobei der Mittelbereich unterhalb des Endbereiches des ersten Randbereiches und unterhalb des Wendepunktes, in dessen Bereich die beiden Biegeabschnitte ineinander übergehen, angeordnet ist. Unter Belastung biegt sich der erste Biegeabschnitt nach oben und wirkt als Vertikalfederabschnitt.

In einer bevorzugten Ausführungsform hat der erste Randbereich vom entsprechenden Endbereich zum Mittelbereich eine im Wesentlichen konstante, wirksame Länge in allen Belastungszuständen. Der Mittelbereich der Feder verschiebt sich somit bei steigender Belastung im Wesentlichen in vertikaler Richtung und nur unwesentlich horizontal in Längsrichtung der Feder. Die wirksame Länge des vom Mittelbereich bis zum Wendepunkt verlaufenden Abschnittes des ersten Biegeabschnittes wird bei steigender Belastung größer, sodass eine stauchende Kraft auf den zweiten Biegeabschnitt in Längsrichtung der Feder ausgeübt wird.

Im Rahmen der Erfindung ist vorzugsweise vorgesehen, dass das gerollte Auge zum Verbinden des Endbereichs des zweiten Randbereichs mit dem Fahrgestell und gegebenenfalls das gerollte Auge zum Verbinden des Endbereichs des ersten Randbereichs am Fahrgestell rotierbar, insbesondere momentbelastet, vorzugsweise drehmomentbelastet, am Fahrgestell befestigbar ist. Somit wird der zweite Biegeabschnitt durch die stauchende Kraft nicht direkt gestaucht, sondern der zum Endbereich verlaufende Abschnitt des zweiten Biegeabschnittes wird durch die Rotationsbewegung in Richtung des gerollten Auges gebogen, wobei dieser Abschnitt in Einbauzustand steiler wird. Die Rotationsbewegung der erfindungsgemäßen Feder ist Teil des Federns.

Der erste Biegeabschnitt wird demnach in vertikale Richtung gebogen und der zweite Biegeabschnitt wird in horizontale Richtung belastet, so dass es zu einer Kombination aus zwei Biegebeanspruchungen kommt.

Im Rahmen der Erfindung kann vorteilhafterweise vorgesehen sein, dass das gerollte Auge um eine Rotationsachse rotierbar am Fahrgestell befestigbar ist, wobei die neutrale Faser der Feder und gegebenenfalls die neutrale Biegefaser der Feder, insbesondere des Randbereichs, von der Rotationsachse beabstanded ist.

Im Rahmen der Erfindung kann weiters vorteilhafterweise vorgesehen sein, dass in den gerollten Augen jeweils eine Lagerbuchse angeordnet ist, die vorzugsweise rotatorisch elastisch wirkt. Durch die Lagerbuchse, die vorzugsweise aus Gummi besteht, wird eine Dämpfungswirkung erzielt, die zu einem weicheren Federverhalten führt.

In einer bevorzugten Ausführungsform der Erfindung ist vorgesehen, dass der zweite Randbereich vom Mittelbereich über den Wendepunkt zu einem Scheitelpunkt und vom Scheitelpunkt kontinuierlich, vorzugsweise im Wesentlichen gerade, zum entsprechenden Endbereich verläuft. Insbesondere dieser gerade verlaufende Bereich wird durch die oben beschriebene Rotationsbewegung derart geneigt, dass er in Einbauzustand bei steigender Belastung steiler verläuft.

In einer bevorzugten Ausführungsform der Erfindung ist vorgesehen, dass der vom Scheitelpunkt zum Endbereich des zweiten Randbereiches verlaufende Abschnitt und der vom Scheitelpunkt in Richtung zum Mittelbereich verlaufende Abschnitt im Bereich des Scheitelpunktes in einem Winkel α von größer als 80°, vorzugsweise von größer als 90°, beispielsweise von ca. 100 bis 150 °, vorzugsweise von 120 bis 140°, insbesondere von 130°, zueinander angeordnet ist. Der Winkel α bleibt bei steigender Belastung zunächst im Wesentlichen gleich und nimmt dann zu. Bei vertikaler Belastung auf den Mittelbereich biegt sich der
vom Mittelbereich bis zum Wendepunkt verlaufende Abschnitt des ersten Biegeabschnittes nach oben. Die resultierende stauchende Kraft auf den zweiten Biegeabschnitt in Längsrichtung der Feder führt aufgrund der drehbaren Lagerung zu einer Rotationsbewegung des zweiten Biegeabschnittes, so dass der Winkel α zunächst gleichbleibt. Die Rotationsbewegung findet nur bis zu einem bestimmten Punkt statt, an dem der vom Scheitelpunkt zum Endbereich verlaufende Randbereich des zweiten Biegeabschnittes in im Wesentlichen gleicher Stellung bleibt. Bei weiterer vertikaler Belastung auf den Mittelbereich biegt sich jedoch der Abschnitt des ersten Biegeabschnittes vom Mittelbereich zum Wendepunkt weiter nach oben, so dass der Winkel α zunimmt.

Im Rahmen der Erfindung kann der erste Biegeabschnitt eine geringere Biegesteifigkeit als der zweite Biegeabschnitt aufweisen.

In einer bevorzugten Ausführungsform der Erfindung weisen die gerollten Augen jeweils eine Stirnseite auf, wobei insbesondere die gerollten Augen ausgehend vom jeweiligen Randbereich ausgelenkt sind und im Wesentlichen kreisförmig verlaufen, und wobei zwischen der Oberfläche des Randbereichs und der Stirnseite des gerollten Auges ein Spalt besteht. Diese Ausführungsform ist deshalb vorteilhaft, da die Feder aus Stahl in einem Warmverformungsverfahren einfach hergestellt werden kann, wogegen derartige gerollte Augen bei Federn aus Kunststoff nicht herstellbar sind.

Besonders bevorzugt ist es, wenn beide gerollten Augen auf der gleichen Seite der Feder verlaufen, d.h. auf der im Einbauzustand oberen Seite ("aufgerolltes Auge") oder auf der im Einbauzustand unteren Seite ("abgerolltes Auge") der Feder. Im Rahmen der Erfindung sind auch sogenannte "Berliner-Augen" denkbar.

Im Rahmen der Erfindung ist bevorzugt vorgesehen, dass der Mittelbereich der Feder einen Klemmbereich aufweist, der über eine Verbindungseinrichtung, insbesondere über einen oder mehrere die Feder im Klemmbereich umfassende U-förmige Bolzen oder Formteile, mit einer Radachse oder einem Radachsenbolzen verbindbar ist. Der Mittelbereich kann einen Klemmbereich aufweisen, dessen Stärke (Höhe) größer ist als die Stärke der angrenzenden Randbereiche, und kann Übergangsbereiche aufweisen, in welchen die Stärke des Federblatts entsprechend zu- bzw. abnimmt.

Das Federblatt der erfindungsgemäßen Feder ist einteilig. Im Rahmen der Erfindung ist es bevorzugt, wenn die Feder eine Einblattfeder ist. Eine erfindungsgemäße Feder kann allerdings auch mit einem Helferblatt oder mit zwei oder mehr als zwei Helferblättern kombiniert werden.

Bei vertikaler Belastung in der Federmitte bewirken die Mehrfachbiegung der Biegeabschnitte und die translatorische Festeinspannung (Rotieren ist möglich) in beiden Federaugen eine zweifache Feder - einmal vertikal (erster Biegeabschnitt), wie Blattfedern immer wirken, und einmal horizontal (zweiter Biegeabschnitt). Die Biegekräfte wirken zusammen und ergeben das nicht-lineare Federverhalten.

Die Erfindung wird anhand eines Ausführungsbeispiels gemäß den Zeichnungen näher erläutert. Es zeigt:
- Fig. 1: eine gattungsgemäße, einteilige Feder aus Federstahl,
- Fig. 2: eine Ausführungsform einer erfindungsgemäßen, einteiligen Feder aus Federstahl,
- Fig. 3: eine Ausführungsform einer erfindungsgemäßen, einteiligen Feder aus Federstahl in Kombination mit Lagerbuchsen und einem Helferblatt und
- Fig. 4: eine Detailansicht im Bereich eines gerollten Auges.

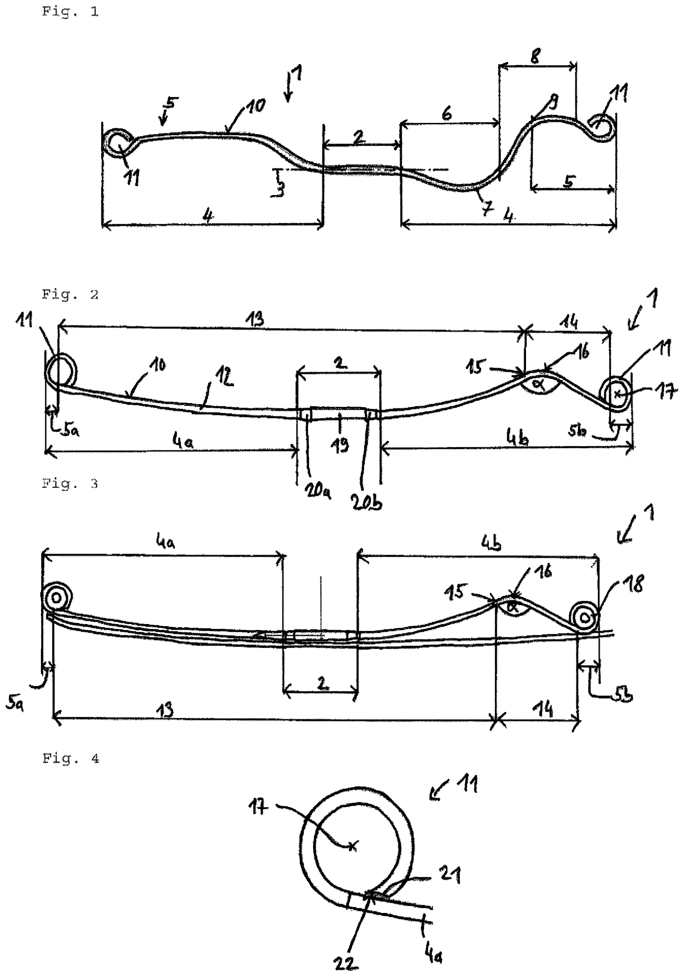

In Fig. 1 ist eine bekannte Blattfeder 1 aus Federstahl in einem im Wesentlichen unbelasteten Zustand dargestellt. Die Blattfeder 1 weist einen Mittelbereich 2 mit einer Mittelachse 3 sowie zwei Randbereiche 4 auf. Die Randbereiche 4 weisen jeweils einen Endbereich 5 auf. Der rechte Randbereich 4 weist angrenzend zum Mittelbereich 2 einen ersten Krümmungsbereich 6 mit einer ersten Krümmungsrichtung und einem ersten Scheitelpunkt 7 auf, wobei sich der erste Scheitelpunkt 7 auf der unteren Seite der Mittelachse 3 befindet. Dieser Randbereich 4 weist in Richtung zu dessen Endbereich 5 hin anschließend einen zweiten Krümmungsbereich 8 mit einer zweiten Krümmungsrichtung und einem zweiten Scheitelpunkt 9 auf, wobei die zweite Krümmungsrichtung der ersten Krümmungsrichtung entgegengesetzt ist und wobei sich der zweite Scheitelpunkt 9 auf der oberen Seite der Mittelachse 3 befindet. Der Endbereich 5 des rechten Randbereichs 4 ist vom zweiten Scheitelpunkt 9 weg hin zu jener Seite geneigt, auf der sich der Mittelbereich 2 befindet. Die Endbereiche 5 weisen jeweils ein gerollte Augen 11 zum Verbinden der Blattfeder 1 mit einem Fahrgestell eines Fahrzeuges auf.

Die in Fig. 1 dargestellte obere Seite der Blattfeder 1 ist deren Oberseite 10, die in Einbauposition im Fahrzeug zum Fahrzeuggestell hinweist.

Im Bereich des ersten Krümmungsbereiches 6 tritt insbesondere durch Scherkräfte eine Kraftverteilung auf, welche das Risiko eines hohen Verschleißes und somit einer unerwünschten Materialermüdung mit sich bringt. Zudem führt der erste Krümmungsbereich 6 zu einer Reduzierung der Bodenfreiheit, wodurch das Risiko von Beschädigungen beim Überfahren eines Hindernisses, z.B. einer Bordsteinkante, erhöht ist.

In den Fig. 2 und 3 sind Ausführungsformen einer erfindungsgemäßen Blattfeder 1 als Parabelfeder zur Verwendung im Zusammenhang mit einem Kraftfahrzeug dargestellt. Die in einem Warmverformungsverfahren herstellbare Blattfeder 1 weist ein einteiliges Federblatt 12 aus Federstahl mit einem Mittelbereich 2 und zwei anschließenden Randbereichen 4a, 4b auf. Die Randbereiche 4a, 4b weisen jeweils einen Endbereich 5a, 5b auf, wobei die Endbereiche 5a, 5b jeweils ortsfest über ein gerolltes Auge 11 mit einem Fahrgestell verbindbar sind und wobei die gesamte Länge der Blattfeder 1, d.h. der Abstand der beiden Augen 11, im Einbauzustand am Kraftfahrzeug in allen Belastungszuständen im Wesentlichen unveränderbar ist.

Das Federblatt 12 weist im unbelasteten Zustand zwei Biegeabschnitte 13, 14 auf, wobei die Biegeabschnitte 13, 14 jeweils eine Krümmung mit einer Krümmungsrichtung aufweisen, wobei die Krümmungsrichtung der beiden Biegeabschnitte 13, 14 entgegengesetzt ist und wobei die beiden Biegeabschnitte 13, 14 im Bereich eines Wendepunktes 15 ineinander übergehen. Der erste Biegeabschnitt 13 verläuft vom Endbereich 5a des ersten Randbereichs 4a über den Mittelbereich 2 bis zum Wendepunkt 15 und der zweite Biegeabschnitt 14 verläuft vom Wendepunkt 15 bis zum Endbereich 5b des zweiten Randbereiches 4b. Der zweite Randbereich 4b verläuft vom Mittelbereich 2 über den Wendepunkt 15 zu einem Scheitelpunkt 16 und vom Scheitelpunkt 16 im Wesentlichen gerade zum Endbereich 5b.

Die gerollten Augen 11 sind um eine Rotationsachse 17 drehbar über eine Lagerbuchse 18 am Fahrgestell befestigbar, wobei die neutrale Faser der Blattfeder 1 und die neutrale Biegefaser der Randbereiche 4a, 4b jeweils von der Rotationsachse 17 beabstandet sind. Beide gerollten Augen 11 verlaufen an der Oberseite 10 der Blattfeder 1.

Der Mittelbereich 2 weist einen Klemmbereich 19 auf, dessen Stärke (Höhe) größer ist als die Stärke der angrenzenden Randbereiche und der beispielsweise über U-förmige Bolzen mit einer Radachse oder einem Radachsenbolzen verbindbar ist. Zwischen dem Klemmbereich 19 und den am Mittelbereich 2 angrenzenden Randbereichen 4a, 4b weist der Mittelbereich 2 Übergangsbereiche 20a, 20b auf, in welchen die Stärke des Federblatts 12 entsprechend zu- bzw. abnimmt.

Die in Fig. 2 und 3 dargestellte obere Seite der Blattfeder 1 ist deren Oberseite 10, die in Einbauposition im Fahrzeug zum Fahrzeuggestell hinweist. Der Wendepunkt 15 ist im Einbauzustand am Fahrzeug bei Nominallast oberhalb des Mittelbereiches 2 angeordnet.

Wie am besten in Fig. 4 ersichtlich, weisen die gerollten Augen 11 jeweils eine Stirnseite 21 auf. Die gerollten Augen 11 verlaufen im Wesentlichen kreisförmig, wobei zwischen der Oberseite 10 des entsprechenden Randbereichs 4a, 4b und der Stirnseite 21 des gerollten Auges 11 ein Spalt 22 besteht.

Mit einer erfindungsgemäßen Blattfeder 1 werden die zum Stand der Technik (siehe Fig. 1) beschriebenen Nachteile behoben.

Bei Kraftfahrzeugen wird zwischen Personenkraftwagen (PKW) und Lastkraftwagen (LKW) unterschieden. Bei LKW wird weiters zwischen leichten LKW ("LLKW", bis 7,5 t), mittelschweren LKW ("LKW", von 7,5 t bis 12 t) und schweren LKW ("SLKW", ab 12 t) unterschieden. Die Anforderungen bezüglich der Federung bzw. der Radaufhängung sind aufgrund der zu transportierenden Lasten jeweils unterschiedlich. Eine erfindungsgemäße Feder kann bei allen genannten Kraftfahrzeugen verwendet werden.

## Patentansprüche

1. Feder zur Verwendung im Zusammenhang mit einem Kraftfahrzeug, insbesondere Blattfeder (1), vorzugsweise Parabelfeder, die ein einteiliges Federblatt (12) aus Stahl, insbesondere Federstahl, mit einem Mittelbereich (2) und zwei anschließenden Randbereichen (4a, 4b) aufweist, wobei die Randbereiche (4a, 4b) jeweils einen Endbereich (5a, 5b) aufweisen und wobei die Endbereiche (5a, 5b) jeweils ortsfest über ein gerolltes Auge (11) mit einem Fahrgestell verbindbar sind, wobei
die gesamte Länge der Feder im Einbauzustand am Fahrzeug in allen Belastungszuständen im Wesentlichen unveränderbar ist, wobei das Federblatt (12) im unbelasteten Zustand genau zwei Biegeabschnitte (13, 14) aufweist, wobei die Biegeabschnitte (13, 14) jeweils genau eine Krümmung mit einer Krümmungsrichtung aufweisen, wobei die Krümmungsrichtung der beiden Biegeabschnitte (13, 14) entgegengesetzt ist und wobei die beiden Biegeabschnitte (13, 14) im Bereich eines Wendepunktes (15) ineinander übergehen, und wobei
der erste Biegeabschnitt (13) ein Vertikalfederabschnitt ist und vom Endbereich (5a) des ersten Randbereichs (4a) über den Mittelbereich (2) bis zum Wendepunkt (15) verläuft und der zweite Biegeabschnitt (14) ein Horizontal- und Vertikalfederabschnitt ist und vom Wendepunkt (15) bis zum Endbereich (5b) des zweiten Randbereiches (4b) verläuft.

2. Feder nach Anspruch 1, **dadurch gekennzeichnet, dass** der erste Biegeabschnitt (13) länger ist als der zweite Biegeabschnitt (14) und dass der zweite Biegeabschnitt (14) stärker gekrümmt ist als der erste Biegeabschnitt (13).

3. Feder nach Anspruch 1 oder 2, **dadurch gekennzeichnet, dass** der erste Randbereich (4a) vom ersten Endbereich (5a) zum Mittelbereich (2) eine im Wesentlichen konstante wirksame Länge in allen Belastungszuständen hat und dass die wirksame Länge des vom Mittelbereich (2) bis zum Wendepunkt (15) verlaufenden Abschnittes des ersten Biegeabschnittes (13) bei steigender Belastung größer wird, sodass eine stauchende Kraft auf den zweiten Biegeabschnitt (14) ausgeübt wird.

4. Feder nach einem der Ansprüche 1 bis 3, **dadurch gekennzeichnet, dass** das gerollte Auge (11) zum Verbinden des Endbereichs (5b) des zweiten Randbereichs (4b) am Fahrgestell und gegebenenfalls das gerollte Auge (11) zum Verbinden des Endbereichs (5a) des ersten Randbereichs (4a) mit dem Fahrgestell rotierbar, insbesondere momentbelastet, vorzugsweise drehmomentbelastet, am Fahrgestell befestigbar ist.

5. Feder nach Anspruch 4, **dadurch gekennzeichnet, dass** das gerollte Auge (11) um eine Rotationsachse (17) rotierbar am Fahrgestell befestigbar ist, wobei die neutrale Faser der Feder und gegebenenfalls die neutrale Biegefaser der Feder, insbesondere des Randbereichs (4a, 4b), von der Rotationsachse (17) beabstanded ist.

6. Feder nach einem der Ansprüche 1 bis 5, **dadurch gekennzeichnet, dass** in den gerollten Augen (11) jeweils eine Lagerbuchse (18) angeordnet ist, die vorzugsweise rotatorisch elastisch wirkt.

7. Feder nach einem der Ansprüche 1 bis 6, **dadurch gekennzeichnet, dass** der zweite Randbereich (4b) vom Mittelbereich (2) über den Wendepunkt (15) zu einem Scheitelpunkt (16) und vom Scheitelpunkt (16) kontinuierlich, vorzugsweise im Wesentlichen gerade, zum Endbereich (5b) verläuft.

8. Feder nach Anspruch 7, **dadurch gekennzeichnet, dass** der vom Scheitelpunkt (15) zum Endbereich (5b) des zweiten Randbereiches (4b) verlaufende Abschnitt und der vom Scheitelpunkt (15) in Richtung zum Mittelbereich (2) verlaufende Abschnitt im Bereich des Scheitelpunktes (15) in einem Winkel (α) von größer als 80°, vorzugsweise von größer als 90°, beispielsweise von ca. 100 bis 150 °, vorzugsweise von 120 bis 140°, insbesondere von 130°, zueinander angeordnet ist.

9. Feder nach einem der Ansprüche 1 bis 8, **dadurch gekennzeichnet, dass** der erste Biegeabschnitt (13) eine geringere Biegesteifigkeit als der zweite Biegeabschnitt (14) aufweist.

10. Feder nach einem der Ansprüche 1 bis 9, **dadurch gekennzeichnet, dass** die gerollten Augen (11) jeweils eine Stirnseite (21) aufweisen.

11. Feder nach Anspruch 10, **dadurch gekennzeichnet, dass** die gerollten Augen (11) ausgehend vom jeweiligen Randbereich (4a, 4b) ausgelenkt sind und im Wesentlichen kreisförmig verlaufen und dass zwischen der Oberfläche des Randbereichs (4a, 4b) und der Stirnseite (21) des gerollten Auges (11) ein Spalt (22) besteht.

12. Feder nach Anspruch 11, **dadurch gekennzeichnet, dass** die gerollten Augen (11) auf der gleichen Seite der Feder verlaufen, insbesondere auf der in Einbauzustand der Feder befindlichen Oberseite (10) des Randbereiches (4a, 4b) oder auf der in Einbauzustand der Feder befindlichen Unterseite des Randbereiches.

13. Feder nach einem der Ansprüche 1 bis 12, **dadurch gekennzeichnet, dass** der Mittelbereich (2) einen Klemmbereich (19) aufweist, der über eine Verbindungseinrichtung, insbesondere über einen oder mehrere die Feder im Klemmbereich (19) umfassende U-förmige Bolzen oder Formteile, mit einer Radachse oder einem Radachsenbolzen verbindbar ist.

## Claims

1. Spring for use in conjunction with a motor vehicle, in particular a leaf spring (1), preferably a parabolic spring, which has a one-part spring leaf (12) made of steel, in particular spring steel, with a central region (2) and two adjacent edge regions (4a, 4b), wherein the edge regions (4a, 4b) each have an end region (5a, 5b) and wherein end regions (5a, 5b) can each be connected to a chassis in a stationary manner via a rolled eye (11), wherein the total length of the spring in an installed state on the vehicle is substantially unchangeable in all load states, wherein in the unloaded state, the spring leaf (12) has exactly two bending sections (13, 14), wherein the bending sections (13, 14) each have exactly one curvature with a curvature direction, wherein the curvature direction of the two bending sections (13, 14) is opposed and wherein the two bending sections (13, 14) merge into each other in the region of a turning point (15), and wherein the first bending section (13) is a vertical spring section and runs from the end region (5a) of the first edge region (4a) via the central region (2) to the turning point (15) and the second bending section (14) is a horizontal and vertical spring section and runs from the turning point (15) to the end region (5b) of the second edge region (4b).

2. Spring according to claim 1, **characterised in that** the first bending section (13) is longer than the second bending section (14) and that the second bending section (14) is more markedly curved than the first bending section (13).

3. Spring according to claim 1 or 2, **characterised in that** the first edge region (4a) has an essentially constant effective length from the end region (5a) to the central region (2) in all load states and that the effective length of the section of the first bending section (13) running from the central region (2) to the turning point (15) becomes greater with increasing load, so that a compressive force is exerted on the second bending section (14).

4. Spring according to any one of claims 1 to 3, **characterised in that** the rolled eye (11) for connecting the end region (5b) of the second edge region (4b) to the chassis and optionally the rolled eye (11) for connecting the end region (5a) of the first edge region (4a) to the chassis can be fastened rotatably, in particular moment-loaded, preferably torque-loaded, to the chassis.

5. Spring according to claim 4, **characterised in that** the rolled eye (11) can be fastened to the chassis so as to be rotatable about a rotary axis (17), wherein the neutral fibre of the spring and optionally the neutral bending fibre of the spring, in particular of the edge region (4a, 4b), are spaced apart from the rotary axis (17).

6. Spring according to any one of claims 1 to 5, **characterised in that** a bearing bush (18) is arranged in each rolled eye (11), said bearing bush preferably acting in a rotationally elastic manner.

7. Spring according to any one of claims 1 to 6, **characterised in that** the second edge region (4b) runs from the central region (2) via the turning point (15) to a vertex (16) and from the vertex (16) continuously, preferably essentially straight, to the end region (5b).

8. Spring according to claim 7, **characterised in that** the section running from the vertex (15) to the end region (5b) of the second edge region (4b) and the section running from the vertex (15) in the direction of the central region (2) are arranged in the region of the vertex (15) at an angle (α) of greater than 80°, preferably of greater than 90°, for example of approximately 100 to 150°, preferably of 120 to 140°, in particular of 130° with respect to one another.

9. Spring according to any one of claims 1 to 8, **characterised in that** the first bending section (13) has a lesser bending strength than the second bending section (14).

10. Spring according to any one of claims 1 to 9, **characterised in that** the rolled eyes (11) each have an end face (21).

11. Spring according to claim 10, **characterised in that** the rolled eyes (11) are deflected starting from the respective edge region (4a, 4b) and run essentially in a circular shape, and that a gap (22) is present between the surface of the edge region (4a, 4b) and the end face (21) of the rolled eye (11).

12. Spring according to claim 11, **characterised in that** the rolled eyes (11) run on the same side of the spring, in particular on the upper side (10) of the edge region (4a, 4b) of the spring in an installed state or on the lower side of the edge region of the spring in an installed state.

13. Spring according to any one of claims 1 to 12, **characterised in that** the central region (2) comprises a clamping region (19), which can be connected to a wheel axle or a wheel axle bolt by means of a connection device, in particular by one or more U-shaped bolts or moulded parts encompassing the spring in the clamping region (19).

## Revendications

1. Ressort destiné à une utilisation dans le contexte d'un véhicule automobile, en particulier un ressort à lame (1), de préférence un ressort parabolique qui présente une lame de ressort d'un seul tenant (12) en acier, en particulier en acier à ressort, avec une zone centrale (2) et deux zones périphériques adjacentes (4a, 4b), les zones périphériques (4a, 4b) présentant respectivement une zone d'extrémité (5a, 5b) et les zones d'extrémité (5a, 5b) pouvant être reliées respectivement, de manière stationnaire, par l'intermédiaire d'une bague roulée (11) à un châssis, l'ensemble de la longueur du ressort en état monté est essentiellement constante dans tous les états de charge, en état non chargée, la lame de ressort (12) présente exactement deux parties fléchies (13, 14), les parties fléchies (13, 14) présentant respectivement exactement une courbure avec un sens de courbure, les sens de courbure des deux parties fléchies (13, 14) étant opposés l'un à l'autre, et les deux parties fléchies (13, 14) se confondant dans la zone d'un point d'inflexion (15) et la première partie fléchie (13) est une partie de ressort verticale et s'étend à partir de la zone d'extrémité (5a) de la première zone périphérique (4a) en passant par la zone centrale (2) jusqu'au point d'inflexion (15) et la seconde partie fléchie (14) est une partie de ressort horizontale et verticale et s'étend à partir du point d'inflexion (15) jusqu'à la zone d'extrémité (5b) de la seconde zone périphérique (4b).

2. Ressort suivant la revendication 1, **caractérisé en ce que** la première partie fléchie (13) est plus longue que la seconde partie fléchie (14) et **en ce que** la seconde partie fléchie (14) est plus fortement courbée que la première partie fléchie (13).

3. Ressort suivant la revendication 1 ou 2, **caractérisé en ce que** la première zone périphérique (4a) a une longueur effective essentiellement constante à partir de la première zone d'extrémité (5a) jusqu'à la zone centrale (2) dans tous les états de charge et **en ce que** la longueur effective de la section s'étendant à partir de la zone centrale (2) jusqu'au point d'inflexion (15) de la première partie fléchie (13) augmente à charge croissante de sorte qu'une force de compression est exercée sur la seconde partie fléchie (14).

4. Ressort suivant une des revendications 1 à 3, **caractérisé en ce que** la bague roulée (1) destinée à relier la zone d'extrémité (5b) de la seconde zone périphérique (4b) au châssis et, le cas échéant, la bague roulée (11) destinée à relier la zone d'extrémité (5a) de la première zone périphérique (4a) au châssis peuvent être fixées au châssis de manière rotative, en particulier chargées par un couple, de préférence chargées par un couple de rotation.

5. Ressort suivant la revendication 4, **caractérisé en ce que** la bague roulée (11) peut être fixée au châssis de manière rotative autour d'un axe de rotation (17), la fibre neutre du ressort et, le cas échéant, la fibre de flexion neutre du ressort, notamment de la zone périphérique (4a, 4b), étant espacées par rapport à l'axe de rotation.

6. Ressort suivant une des revendications 1 à 5, **caractérisé en ce que** un coussinet de palier (18) exerçant une action élastique en rotation est disposé respectivement dans les bagues roulées (11).

7. Ressort suivant une des revendications 1 à 6, **caractérisé en ce que** la seconde zone périphérique (4b) s'étend en continu, de préférence de manière essentiellement droite à partir de la partie centrale (2) en passant par le point d'inflexion (15) à un sommet (16) et à partir du sommet (16) à la zone d'extrémité (5b).

8. Ressort suivant la revendication 7, **caractérisé en ce que** la partie s'étendant à partir du sommet (15) jusqu'à la zone d'extrémité (5b) de la seconde zone périphérique (4b) et la partie s'étendant à partir du sommet (15) en direction de la zone centrale (2) sont disposées au niveau du sommet (15) de manière à former un angle α supérieur à 80°, de préférence supérieur à 90°, par exemple de 100 à 150° environ, de préférence de 120 à 140°, en particulier de 130° l'une par rapport à l'autre.

9. Ressort suivant une des revendications 1 à 8, **caractérisé en ce que** la première partie fléchie (13) présente une résistance à la flexion inférieure à celle de la seconde partie fléchie (14).

10. Ressort suivant une des revendications 1 à 9, **caractérisé en ce que** les bagues roulées (11) présentent respectivement une face frontale (21).

11. Ressort suivant la revendication 10, **caractérisé en ce que** les bagues roulées (11) sont déviées à partir de la zone périphérique respective (4a, 4b) et s'étendent de manière essentiellement circulaire et **en ce qu'**il existe une fente entre la surface de la zone périphérique (4a, 4b) et la face frontale (21) de la bague roulée (11).

12. Ressort suivant la revendication 11, **caractérisé en ce que** les bagues roulées (11) s'étendent sur le même côté du ressort, en particulier sur la face supérieure (10) de la zone périphérique (4a, 4b) en état monté du ressort ou sur la face inférieure de la zone périphérique en état monté du ressort.

13. Ressort suivant une des revendications 1 à 12, **caractérisé en ce que** la zone centrale (2) présente une zone de serrage (19) qui peut être reliée à l'axe de roues ou à un boulon d'axe de roues par l'intermédiaire d'un ou de plusieurs boulons ou pièces moulées en forme de U enchâssant le ressort dans la zone de serrage (19).
